# FASCICULE DE BREVET EUROPEEN

(11) **EP 3 248 830 B1**
(45) Date de publication et mention de la délivrance du brevet: **30.12.2020**
(21) Numéro de dépôt: 17171914.9
(22) Date de dépôt: 19.05.2017
(51) Int. Cl.: B60N 2/06, B60N 2/07, B61D 17/10, B61D 33/00, B60N 2/015

(54) **VÉHICULE DE TRANSPORT DE VOYAGEURS ET PROCÉDÉ D'AMÉNAGEMENT INTÉRIEUR D'UN TEL VÉHICULE**
TRANSPORTFAHRZEUG FÜR REISENDE, UND VERFAHREN ZUR INNENAUSSTATTUNG EINES SOLCHEN FAHRZEUGS
PASSENGER TRANSPORT VEHICLE AND METHOD FOR ARRANGING THE INSIDE OF SUCH A VEHICLE

(30) Priorité: 26.05.2016 FR 1654753
(43) Date de publication de la demande: 29.11.2017
(73) Titulaire: SNCF Mobilités, 93200 Saint-Denis (FR)
(72) Inventeur: CLAUDEL, Alain, 93250 Villemomble (FR)
(74) Mandataire: Argyma

(56) Documents cités:
- EP-A1- 3 243 694
- DE-A1- 1 580 037
- NL-A- 9 101 731

## Description

### DOMAINE TECHNIQUE GENERAL ET ART ANTERIEUR

La présente invention concerne le domaine de l'aménagement intérieur d'un véhicule de transport de voyageurs, en particulier, la modification de la position des sièges dans un véhicule ferroviaire.

Un véhicule ferroviaire de transport de voyageurs comporte, de manière classique, un châssis structural monté sur des essieux destinés à entrer en contact avec les rails d'une voie ferroviaire. Le châssis structural s'étend longitudinalement selon un axe longitudinal et latéralement selon un axe latéral orthogonal audit axe longitudinal. De plus, le véhicule ferroviaire comporte une pluralité de sièges destinés au confort des voyageurs qui sont fixés à l'intérieur du châssis. La demande de brevet NL 9 101 731A enseigne un système de montage d'un siège dans un châssis de véhicule.

De manière connue, les sièges sont regroupés en rangées espacées selon la direction longitudinale du châssis. Chaque rangée de sièges s'étend ainsi latéralement et comporte généralement deux ensembles de sièges séparés par un couloir de circulation. La position et la largeur du couloir de circulation peuvent varier d'un véhicule ferroviaire à un autre, notamment selon qu'il s'agit d'un véhicule ferroviaire de seconde classe ou d'un véhicule ferroviaire de première classe. A titre d'exemple, un véhicule de seconde classe comporte généralement, pour chaque rangée de sièges, deux ensembles de deux sièges (configuration 2+2) séparés par un couloir de circulation qui est centré et dont la largeur est standard. Un véhicule de première classe comporte généralement, pour chaque rangée de sièges, un ensemble de deux sièges et un ensemble d'un unique siège (configuration 2+1) qui sont séparés par un couloir de circulation qui est décalé par rapport au centre du châssis structural et dont la largeur est augmentée par comparaison à un véhicule de seconde classe.

En pratique, il est complexe de modifier l'aménagement intérieur d'un véhicule ferroviaire, notamment en transformant un véhicule de première classe en un véhicule de seconde classe ou inversement, étant donné que les sièges sont fixés au châssis structural du véhicule ferroviaire. Toute opération de rénovation intérieure est complexe, chronophage et coûteuse, ce qui présente un inconvénient important et freine tout projet d'aménagement intérieur.

Un des objectifs de la présente invention est de proposer un nouveau véhicule de transport de voyageurs dans lequel l'aménagement intérieur soit simple, rapide à mettre en œuvre et peu onéreux afin de favoriser la transformation d'un véhicule ferroviaire existant.

### PRESENTATION GENERALE DE L'INVENTION

A cet effet, l'invention concerne un véhicule ferroviaire de transport de voyageurs, comprenant un châssis structural s'étendant longitudinalement selon un axe longitudinal et latéralement selon un axe latéral et au moins une poutre de support de sièges reliée audit châssis structural, ladite poutre de support s'étendant longitudinalement selon l'axe longitudinal dudit châssis structural.

L'invention est remarquable en ce que ladite poutre de support est reliée au châssis structural par des moyens de fixation configurés pour modifier la position latérale de ladite poutre de support par rapport audit châssis structural.

Grâce au véhicule selon l'invention, la position des sièges et, par voie de conséquence, la position et la largeur d'un couloir de circulation peuvent être avantageusement réglés de manière pratique en modifiant la position latérale de la poutre de support des sièges. De manière avantageuse, la structure globale du véhicule n'est pas modifiée, seuls les moyens de fixation de la poutre de support au châssis sont changés. La résistance mécanique n'est pas affectée, les efforts mécaniques transitant dans les moyens de fixation de manière similaire à l'art antérieur. De manière préférée, lesdits moyens de fixation sont configurés pour verrouiller/déverrouiller la poutre de support audit châssis structural lors d'un aménagement intérieur dudit véhicule.

De préférence, le véhicule comprend au moins deux poutres de support afin de former un couloir de circulation entre lesdits sièges. Ainsi, avec deux poutres de support pouvant être déplacées, on peut régler librement la position et la largeur du couloir de circulation lors de l'aménagement intérieur d'un véhicule. De préférence, le véhicule ne comprend que deux poutres de support dans la largeur du châssis structural.

De manière préférée, les moyens de fixation comportent une pluralité d'organes de fixation répartis longitudinalement sur ladite poutre de support afin que la poutre de support soit maintenue de manière homogène sur sa longueur.

Avantageusement, chaque organe de fixation comporte une partie de base, montée mobile dans le châssis structural, et une partie de tête, solidaire de la poutre de support, la partie de base et la partie de tête étant adaptées pour être solidarisées ensemble, de préférence, par serrage afin de permettre, d'une part, la modification de la position latéral de la poutre de support et, d'autre part, le verrouillage de la poutre de support à une position latérale déterminée. De manière préférée, la partie de base est guidée dans le châssis structural lors d'un déplacement de la poutre de support, ce qui garantit un positionnement précis.

De manière préférée, la partie de tête est solidarisée à une paroi latérale de la poutre de support, en particulier, par soudage afin d'améliorer la transmission des efforts mécaniques entre les sièges et le châssis structural. De préférence, la partie de tête se présente sous forme d'une tôle coudée dont le coût est réduit.

De préférence, la partie de base comporte une tige filetée pour permettre sa coopération avec la partie de tête. De manière préférée, la tige filetée s'étend verticalement.

De manière préférée, les organes de fixation sont montés par paire, de préférence de part et d'autre de la poutre de support afin d'augmenter la résistance mécanique de la fixation de la poutre de support. En outre, la répartition les efforts mécaniques est améliorée.

De préférence, le châssis structural comprend une pluralité de traverses s'étendant latéralement selon l'axe latéral, et la poutre de support est reliée à chaque traverse par un organe de fixation. Ainsi, la qualité de fixation en position verrouillée est optimale sur la longueur de la poutre de support.

Avantageusement, chaque traverse comprend une fente de guidage, de sorte qu'au moins un organe de fixation est monté coulissant dans chaque fente afin de guider latéralement la poutre de support par rapport à la traverse. De préférence, la partie de base de chaque organe de fixation est montée dans une fente de guidage d'une traverse. Ainsi, le déplacement latéral est guidé sur la longueur de la poutre de support, ce qui évite toute inclinaison de la poutre de support lors de son déplacement latéral.

De manière avantageuse, les moyens de fixation sont configurés pour serrer ladite poutre de support audit châssis structural afin de permettre de verrouiller/déverrouiller aisément la position latérale de la poutre de support par rapport au châssis structural.

De manière préférée, le châssis structural comprend des moyens d'indexage de la position latérale de la poutre de support afin de positionner précisément la poutre de support selon l'axe latéral. De préférence, les moyens d'indexage comprennent au moins une graduation sur au moins une traverse. Ainsi, un opérateur peut positionner de manière rapide et précise une poutre de support à la position latérale souhaitée.

L'invention concerne également un procédé d'aménagement intérieur d'un véhicule de transport de voyageurs, le véhicule comprenant un châssis structural s'étendant longitudinalement selon un axe longitudinal et latéralement selon un axe latéral, au moins une poutre de support de sièges reliée audit châssis structural par des moyens de fixation, ladite poutre de support s'étendant longitudinalement selon l'axe longitudinal du châssis structural, le procédé comprenant :
- une étape de déverrouillage des moyens de fixation de manière à désolidariser la poutre de support du châssis structural,
- une étape de déplacement latéral de la poutre de support par rapport au châssis structural d'une première position jusqu'à une deuxième position, et
- une étape de verrouillage des moyens de fixation de manière à solidariser la poutre de support au châssis structural à la deuxième position.

Grâce au procédé selon l'invention, l'aménagement intérieur d'un véhicule est aisé et rapide grâce au déplacement latéral de la poutre de support. Un tel déplacement est permis grâce aux moyens de fixation de la poutre de support qui permettent de bloquer la poutre de support à une nouvelle position latérale correspondant au nouvel aménagement intérieur.

De préférence, l'étape de déverrouillage comprend le desserrage des moyens de fixation. De préférence encore, l'étape de verrouillage comprend le serrage des moyens de fixation. Un déverrouillage/verrouillage par serrage est aisé et rapide à mettre en oeuvre par un opérateur au moyen d'une clé de serrage traditionnelle.

Selon un aspect préféré, lorsque le véhicule comprend au moins deux poutres de support définissant entre elles un couloir de circulation, le procédé comporte une étape de déplacement desdites poutres de support pour modifier la position du couloir de circulation. Ainsi, il est aisé de modifier l'aménagement intérieur d'un véhicule de première classe en seconde classe et inversement.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue en coupe transversale d'un véhicule ferroviaire à deux niveaux selon une forme de réalisation de l'invention,
- la figure 2 est une vue en perspective partielle du châssis du véhicule ferroviaire de la figure 1 sur lequel sont montées des poutres de support,
- la figure 3 est une vue éclatée d'une forme de réalisation d'un organe de fixation d'une poutre de support au châssis de la figure 2,
- la figure 4 est une vue rapprochée du niveau inférieur du véhicule ferroviaire de la figure 1 selon une première configuration intérieure dite de première classe, et
- la figure 5 est une vue rapprochée du niveau inférieur du véhicule ferroviaire de la figure 1 selon une deuxième configuration intérieure dite de seconde classe.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN ŒUVRE

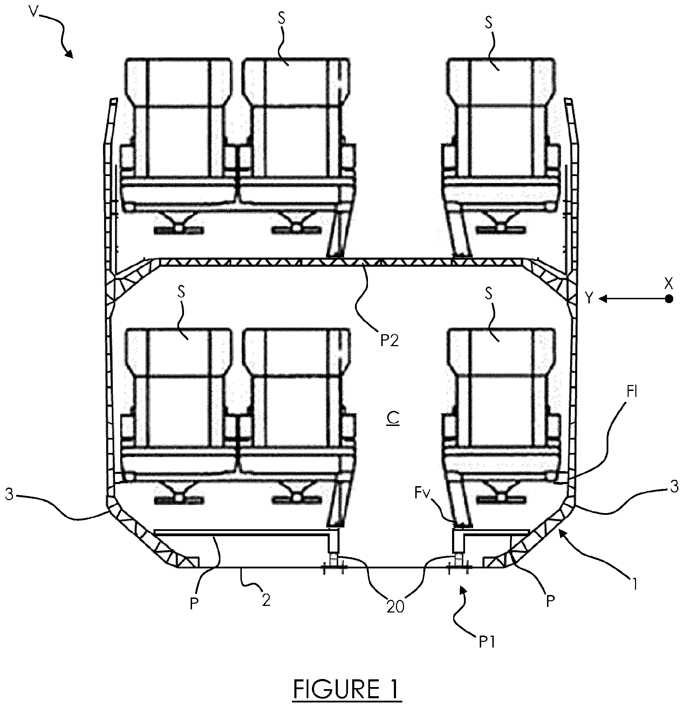

En référence à la figure 1, il est représenté de manière schématique un véhicule ferroviaire V pour le transport de voyageurs à deux niveaux comprenant une plateforme inférieure P1 et une plateforme supérieure P2 qui comportent chacune une pluralité de sièges S. Par siège S, on entend un module de siège pouvant accueillir une ou plusieurs personnes comme illustrés à la figure 1.

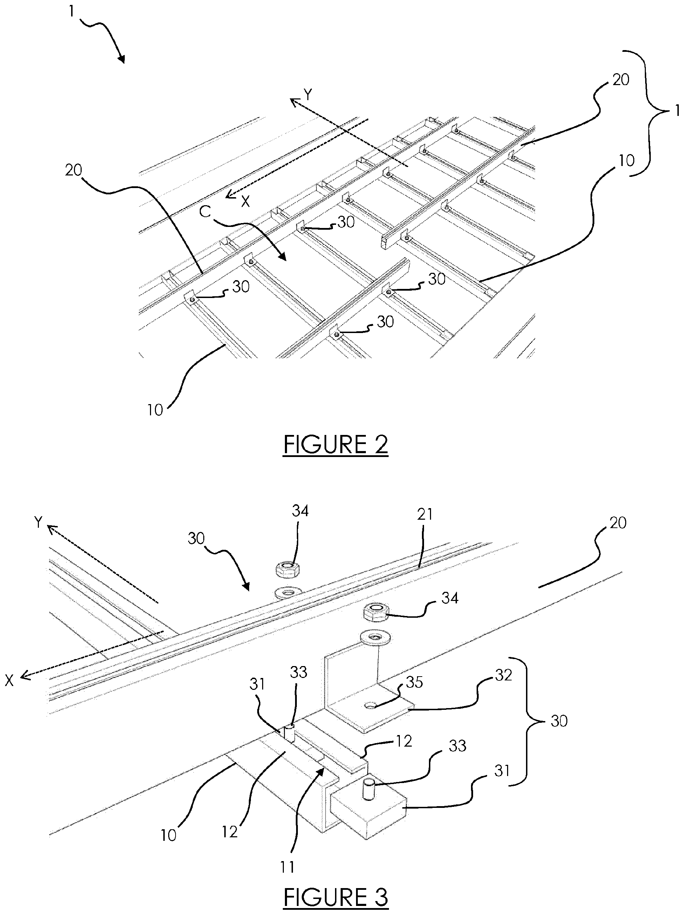

De manière classique, en référence à la figure 2, le véhicule ferroviaire V comporte un châssis structural 1 s'étendant longitudinalement selon un axe longitudinal X et latéralement selon un axe latéral Y. Dans cet exemple, le châssis structural 1 est réalisé en aluminium de manière à posséder une masse réduite. Néanmoins, il va de soi que d'autres matériaux pourraient convenir, en particulier, de l'acier. Le châssis structural 1 est également connu de l'homme du métier sous la désignation de « caisse » ou « chaudron ».

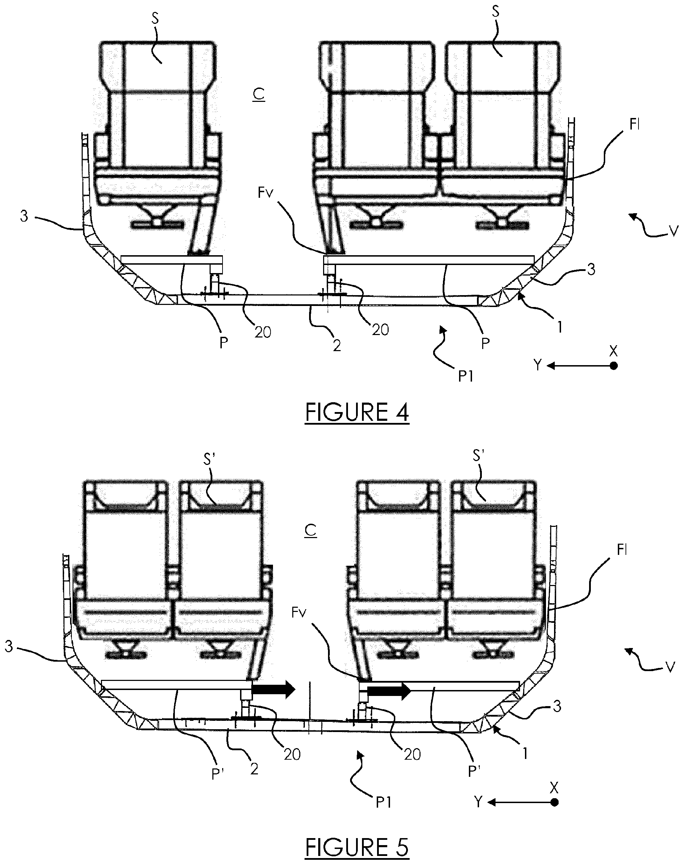

Les sièges S sont regroupés en rangées espacées selon l'axe longitudinal X du châssis 1. Chaque rangée de sièges S s'étend ainsi transversalement selon l'axe latéral Y du châssis 1 et comporte généralement deux modules de siège S séparés par un couloir de circulation C. La position et la largeur du couloir de circulation C peuvent varier d'un véhicule ferroviaire V à un autre, notamment selon qu'il s'agit d'un véhicule ferroviaire V de seconde classe ou d'un véhicule ferroviaire V de première classe. A titre d'exemple, un véhicule V de seconde classe comporte généralement, pour chaque rangée de sièges S, deux modules de deux sièges S (configuration 2+2) séparés par un couloir de circulation C centré, de largeur standard, comme illustré à la figure 5, tandis qu'un véhicule V de première classe comporte généralement, pour chaque rangée de sièges S, un module de deux sièges S et un module d'un unique siège S (configuration 2+1) qui sont séparés par un couloir de circulation C qui est décalé par rapport au centre du châssis structural 1, comme illustré sur les figures 1 et 4, et dont la largeur est augmentée par comparaison à un véhicule V de seconde classe.

En référence à la figure 1, au niveau de la plateforme inférieure P1, le châssis structural 1 possède une forme en U définissant une paroi de fond horizontale 2 et deux parois latérales 3. La plateforme supérieure P2 est montée au niveau de l'ouverture de la forme en U et forme un plafond au-dessus de la plateforme inférieure P1. Comme illustré à la figure 2, le châssis structural 1 comprend des traverses 10 sur lesquelles sont montées les poutres 20 de support de sièges S par l'intermédiaire de moyens de fixation permettant de se verrouiller/déverrouiller afin de modifier la position latérale de la poutre de support 20 par rapport aux traverses 10 du châssis structural 1.

Les traverses 10, les poutres de support 20 et les moyens de fixation vont être dorénavant présentés de manière individuelle.

En référence aux figures 2 et 3, les traverses 10 s'étendent transversalement, autrement dit, selon l'axe latéral Y du châssis structural 1. De préférence, la longueur d'une traverse 10 est comprise entre 170 cm et 180 cm afin de correspondre à la largeur du châssis structural 1 et permettre une grande amplitude de réglage en largeur comme cela sera présenté par la suite. Les traverses 10 sont espacées régulièrement selon l'axe longitudinal X, de préférence d'une distance de l'ordre de 45 cm, de manière à être réparties sur la paroi de fond 2 du châssis structural 1 selon sa longueur.

Comme illustré sur les figures 2 et 3, chaque traverse 10 se présente sous la forme d'un corps allongé creux de section rectangulaire et dont une face supérieure comporte une fente de guidage 11 s'étendant selon la longueur de la traverse 10. En référence à la figure 3, la face supérieure de la traverse 10 comporte ainsi deux parois supérieures 12 séparées par une fente de guidage 11. Une telle traverse 10 est connue de l'homme du métier sous la désignation de profilé avec rainure en T. Chaque traverse 10 est fixée solidairement à la paroi de fond 2 du châssis structural 1 via une face inférieure, notamment par soudure.

Toujours en référence aux figures 2 et 3, les poutres de support 20 s'étendent selon l'axe longitudinal X du châssis structural 1 et sont montées sur les traverses 10. Dans cet exemple, chaque poutre de support 20 se présente sous la forme d'un corps allongé connu de l'homme du métier sous la désignation de longrine. De préférence, la longueur d'une poutre de support 20 est comprise entre 200 cm et 500 cm. De manière préférée, la poutre de support 20 possède une section rectangulaire qui est, de manière préférée, plus importante que celle d'une traverse 10.

Dans cet exemple, en référence à la figure 3, la poutre de support 20 comporte des moyens de liaison qui se présentent sous la forme d'une rainure longitudinale 21 formée dans une face supérieure de la poutre de support 20. De tels moyens de liaison permettent la fixation d'un siège, d'une plateforme ou autre équipement de manière pratique. Néanmoins, il va de soi que d'autres moyens de liaison pourraient convenir. Comme illustré à la figure 2, le châssis structural 1 comprend deux poutres de support 20 parallèles et délimitant entre elles un couloir de circulation C. Cependant, il va de soi qu'il pourrait comprendre un nombre différent de poutres de support 20, notamment une ou plus de deux. Comme cela sera présenté par la suite, l'utilisation d'au moins deux poutres de support 20 permet de définir sans contrainte la position et la largeur du couloir de circulation C.

Comme illustré à la figure 1, chaque siège S est fixé verticalement au niveau d'un point de fixation vertical Fv à la paroi de fond 2 et latéralement au niveau d'un point de fixation latéral Fl à une paroi latérale 3 du châssis structural 1. Au niveau du point de fixation vertical Fv, chaque siège S est fixé directement à une poutre de support 20 qui est solidaire du châssis structural 1. La poutre de support 20 permet également de supporter d'autres équipements, notamment, un plancher P (également désigné « estrade ») positionné sous les sièges S comme illustré à la figure 1.

Dans cet exemple, le véhicule V comprend deux planchers P montés de part et d'autre du couloir de circulation C dans deux poutres de support 20 parallèles. De manière préférée, un plancher P est fixé au châssis structural 1 entre une poutre de support 20 et une paroi latérale 3.

Selon l'invention, le véhicule ferroviaire V comporte des moyens de fixation d'une poutre de support 20 sur les traverses 10. Les moyens de fixation permettent avantageusement de se verrouiller/déverrouiller pour modifier la position latérale de la poutre de support 20 par rapport au châssis structural 1.

En référence aux figures 2 et 3, les moyens de fixation comprennent une pluralité d'organes de fixation 30 de manière à fixer la poutre de support 20 à une pluralité de traverses 10. De manière préférée, chaque poutre de support 20 est fixée à une traverse 10 par une paire d'organes de fixation 30, de préférence, montés de manière symétrique. Les organes de fixation 30 sont disposés latéralement à la poutre de support 20 comme illustré à la figure 3 afin d'améliorer la résistance mécanique de la fixation.

Par souci de clarté, un unique organe de fixation 30 va être dorénavant présenté. En référence à la figure 3, l'organe de fixation 30 comprend une partie de base 31 montée mobile dans la cavité de la traverse 10 et une partie de tête 32 solidaire de la poutre de support 20.

Dans cet exemple, la partie de base 31 comporte un corps en forme de pavé et une tige filetée 33 s'étendant verticalement depuis ledit corps. La tige filetée 33 est adaptée pour s'étendre en saillie de la fente de guidage 11 de la traverse 10 en position de verrouillage. De manière avantageuse, une telle tige filetée 33 permet, d'une part, de guider la partie de base 31 dans la traverse 10 et, d'autre part, de permettre la liaison avec la partie de tête 32. De préférence, la largeur du pavé dont la partie de base 31 a la forme est sensiblement égale à la largeur de la cavité de la traverse 10 de manière à limiter tout jeu de fonctionnement.

Dans cet exemple, la partie de tête 32 se présente sous forme d'une tôle coudée dont une paroi verticale est soudée latéralement à une face latérale de la poutre de support 20 et dont une paroi horizontale comporte une ouverture 35 pour le passage de la tige filetée 33 de la partie de base 31.

Avantageusement, la partie de tête 32 et la partie de base 31 sont reliées par serrage. A cet effet, l'organe de fixation 30 comporte en outre un écrou de serrage 34 adapté pour coopérer avec la tige filetée 33 de la partie de base 31. Une rondelle peut être ajoutée de manière optionnelle.

Le serrage de la partie de tête 32 sur la partie de base 31 permet de bloquer la position de l'organe de fixation 30 sur la traverse 10 et, par voie de conséquence, la position de la poutre de support 20. La partie de tête 32 et la partie de base 31 sont positionnées de part et d'autre des parois supérieures 12 de la face supérieure de la traverse 10. Lors du serrage, les parois supérieures 12 de la traverse 10 sont prises en sandwich ce qui assure une fixation pérenne. Autrement dit, lorsque l'organe de fixation 30 est serré/verrouillé, la position de la poutre de support 20 est fixe par rapport à la traverse 10.

En position desserrée/déverrouillée, la partie de base 31 et la partie de tête 32 restent de préférence reliées mais la pression de serrage appliquée sur les parois supérieures 12 de la traverse 10 est supprimée. Aussi, de manière avantageuse, l'organe de fixation 30 peut être déplacé latéralement le long de la traverse 10 du fait de la coopération de la tige filetée 33 de l'organe de fixation 30 avec la fente de guidage 11 de la traverse 10. Une fois à la position souhaitée, il suffit d'augmenter le serrage pour verrouiller l'organe de fixation 30 et interdire tout déplacement latéral.

Dans cet exemple, deux organes de fixation 30 sont montés par paire afin de relier la poutre de support 20 à une traverse 10. Deux parties de tête 32 sont alors montées de part et d'autre d'une poutre de support 20 et reliées respectivement à deux parties de base 31 montées mobiles par rapport à la traverse 10.

Selon un aspect de l'invention non représenté, le châssis structural 10 comprend des moyens d'indexage permettant de déterminer la position latérale de la poutre de support 20 par rapport au châssis structural 1 afin de régler précisément la position de la poutre de support 20. De tels moyens d'indexage peuvent comprendre des graduations, par exemple, une règle millimétrée à partir du milieu du châssis structural 1, notamment sur une surface visible du châssis structural 1. De préférence, au moins une traverse 10 comporte de tels moyens d'indexage. De préférence, les moyens de fixation peuvent comprendre un repère pour faciliter le positionnement de la poutre de support 20 sur les graduations. Lors du déplacement latéral de la poutre de support 20 par rapport à une traverse 10, le repère se déplace le long des graduations afin de positionner la poutre de support 20 à la position désirée. Ainsi, il est possible de déplacer de manière précise et fiable la poutre de support 20 afin d'aménager l'intérieur du véhicule 1, notamment selon la classe désirée.

Il va maintenant être présenté un exemple de mise en œuvre d'un procédé d'aménagement intérieur du véhicule ferroviaire V selon l'invention. Dans cet exemple, un véhicule ferroviaire V de type première classe (Figure 4) est aménagé en un véhicule de type seconde classe (Figure 5).

Comme présenté précédemment, selon le type d'aménagement, le nombre de sièges S par rangée, la position et la taille du couloir de circulation C varient. Grâce à l'invention, il est possible de déplacer les poutres de support 20 sur lesquelles sont fixés les sièges S et qui délimitent le couloir de circulation C afin de modifier l'aménagement intérieur de manière simple et pratique.

Préalablement au déplacement des poutres de support 20, les sièges S et les planchers P sont démontés de manière classique, notamment par dévissage. Ainsi, les organes de fixation 30 sont accessibles par un opérateur.

Pour déplacer une poutre de support 20, les organes de fixation 30 reliés à chacune des traverses 10 sont tout d'abord déverrouillés, notamment par desserrage des écrous 34. Avantageusement, le desserrage permet de débloquer la position de la poutre de support 20 sans nécessiter le démontage de celle-ci. Les écrous de serrage 34 restent avantageusement engagés avec les tiges filetées 33.

Puis, la poutre de support 20 est déplacée latéralement par guidage des organes de fixation 30 dans les fentes 11 des traverses 10. Le guidage est homogène et permet de maintenir la poutre de support 20 parallèle à sa position initiale. La poutre de support 20 est alors déplacée jusqu'à ce que les moyens d'indexage indiquent la position désirée de la poutre de support 20. Dans cet exemple, en référence à la figure 5, les deux poutres de support 20 sont chacune déplacées d'une distance latérale de 36 cm.

La position de la poutre de support 20 est ensuite bloquée par verrouillage des organes de fixation 30 sur les traverses 10. Pour ce faire, les organes de fixation 30 sont serrés sur chaque traverse 10.

Lorsque la position des poutres de support 20 est verrouillée, de nouveaux planchers P' et de nouveaux sièges S' correspondant au nouveau type de configuration intérieur sont montés sur les poutres de support 20.

Comme illustré à la figure 2, le véhicule V peut comprendre une pluralité de poutres de support 20 décalées selon l'axe longitudinal X du châssis structural 1 de manière à obtenir différents écartements entre les poutres de support 20 le long du véhicule ferroviaire V afin de permettre différents aménagements intérieurs du véhicule V sur un même châssis structural 1. La position de chaque poutre de support 20 peut être réglée indépendamment, ce qui permet d'aménager une seule partie longitudinale du véhicule ferroviaire V.

Grâce à l'invention, il est ainsi possible de modifier la position des sièges S en modifiant la position latérale des poutres de support 20 afin de basculer entre un aménagement intérieur de type première classe comme illustré sur la figure 4, dans lequel le couloir de circulation C est décalé, et un aménagement intérieur de type seconde classe comme illustré sur la figure 5, dans lequel le couloir de circulation C est centré. Avantageusement, les efforts mécaniques sont repris par le châssis structural 1 grâce aux moyens de fixation reliant les poutres de support 20 au châssis structural 1.

Un tel aménagement du véhicule ferroviaire V ne nécessite aucun nouvel outil et peut être effectué rapidement dans un centre de maintenance de véhicules ferroviaires. La modification de la position des poutres de support 20 par desserrage puis serrage est aisée, rapide et peu onéreuse. De plus, grâce à l'indexage, il est aisé de régler précisément la position latérale des poutres de support 20 par rapport au châssis structural 1. Un tel véhicule ferroviaire V est ainsi aisément aménageable.

L'invention a été présentée pour un véhicule ferroviaire V du type duplex, mais elle s'applique à tout type de véhicule ferroviaire.

## Revendications

1. Véhicule ferroviaire (V) de transport de voyageurs comprenant :
- un châssis structural (1) s'étendant longitudinalement selon un axe longitudinal (X) et latéralement selon un axe latéral (Y),
- au moins une poutre (20) de support de sièges (S) reliée audit châssis structural (1), ladite poutre de support (20) s'étendant longitudinalement selon l'axe longitudinal (X) dudit châssis structural (1),
**véhicule caractérisé par le fait que**
- ladite poutre de support (20) est reliée au châssis structural (1) par des moyens de fixation configurés pour modifier la position latérale de ladite poutre de support (20) par rapport audit châssis structural (1).

2. Véhicule ferroviaire (V) selon la revendication 1, dans lequel les moyens de fixation comportent une pluralité d'organes de fixation (30) répartis longitudinalement sur ladite poutre de support (20).

3. Véhicule ferroviaire (V) selon la revendications précédente, dans lequel chaque organe de fixation (30) comporte une partie de base (31), montée mobile dans le châssis (1), et une partie de tête (32), solidaire de la poutre de support (20), la partie de base (31) et la partie de tête (32) étant adaptées pour être solidarisées ensemble, de préférence, par serrage.

4. Véhicule ferroviaire (V) selon l'une des revendications 2 à 3, dans lequel le châssis structural (1) comprend une pluralité de traverses (10) s'étendant latéralement selon l'axe latéral (Y), et la poutre de support (20) est reliée à chaque traverse (20) par un organe de fixation (30).

5. Véhicule ferroviaire (V) selon la revendication précédente, dans lequel chaque traverse (10) comprend une fente de guidage (11), de sorte qu'au moins un organe de fixation (30) est monté coulissant dans chaque fente de guidage (11).

6. Véhicule ferroviaire (V) selon la revendication 3, dans lequel la partie de base (31) comporte une tige filetée (33) pour permettre sa coopération avec la partie de tête (32).

7. Véhicule ferroviaire (V) selon l'une des revendications précédentes, dans lequel les moyens de fixation sont configurés pour serrer ladite poutre de support (20) audit châssis structural (1).

8. Véhicule ferroviaire (V) selon l'une des revendications précédentes, dans lequel le châssis structural (1) comprend des moyens d'indexage de la position latérale de la poutre de support (20).

9. Procédé d'aménagement intérieur d'un véhicule ferroviaire (V) de transport de voyageurs, le véhicule (V) comprenant un châssis structural (1) s'étendant longitudinalement selon un axe longitudinal (X) et latéralement selon un axe latéral (Y), au moins une poutre (20) de support de sièges (S) reliée audit châssis structural (1) par des moyens de fixation, ladite poutre de support (20) s'étendant longitudinalement selon l'axe longitudinal (X) du châssis structural (1), le procédé comprenant :
- une étape de déverrouillage des moyens de fixation de manière à désolidariser la poutre de support (20) du châssis structural (1),
**procédé caractérisé par le fait qu'il comprend** :
- une étape de déplacement latéral de la poutre de support par rapport au châssis structural (1) d'une première position jusqu'à une deuxième position, et
- une étape de verrouillage des moyens de fixation de manière à solidariser la poutre de support (20) au châssis structural à la deuxième position.

10. Procédé selon la revendication précédente, dans lequel l'étape de déverrouillage comprend le desserrage des moyens de fixation.

## Patentansprüche

1. Schienenfahrzeug (V) zur Beförderung von Fahrgästen, umfassend:
- ein Strukturfahrgestell (1), das sich in Längsrichtung gemäß einer Längsachse (X) und seitlich gemäß einer Seitenachse (Y) erstreckt,
- wenigstens einen Trägerbalken (20) von Sitzen (S), der mit dem genannten Strukturfahrgestell (1) verbunden ist, wobei der genannte Trägerbalken (20) sich in Längsrichtung gemäß der Längsachse (X) des genannten Strukturfahrgestells (1) erstreckt,
**wobei das Fahrzeug dadurch gekennzeichnet ist, dass;**
- der genannte Trägerbalken (20) mit dem Strukturfahrgestell (1) durch Befestigungsmittel verbunden ist, die zum Abändern der seitlichen Position des genannten Trägerbalkens (20) in Bezug auf das genannte Strukturfahrgestell (1) verbunden ist.

2. Schienenfahrzeug (V) gemäß Anspruch 1, bei dem die Befestigungsmittel eine Vielzahl von Befestigungsorganen (30) umfassen, die in Längsrichtung auf dem genannten Trägerbalken (20) verteilt sind.

3. Schienenfahrzeug (V) gemäß dem voranstehenden Anspruch, bei dem jedes Befestigungsorgan (30) einen Basisteil (31), der mobil in dem Rahmen (1) montiert ist, und einen Kopfteil (32), der mit dem Trägerbalken (20) fest verbunden ist, umfasst, wobei der Basisteil (31) und der Kopfteil (32) geeignet sind, um gemeinsam fest befestigt zu sein, vorzugsweise per Einspannen.

4. Schienenfahrzeug (V) gemäß einem der Ansprüche 2 bis 3, bei dem das Strukturfahrgestell (1) eine Vielzahl von Querbalken (10) umfasst, die sich seitlich gemäß der Seitenachse (Y) erstrecken, und der Trägerbalken (20) mit jedem Querbalken (20) durch ein Befestigungsorgan (30) verbunden ist.

5. Schienenfahrzeug (V) gemäß dem voranstehenden Anspruch, bei dem jeder Querbalken (10) einen Führungsschlitz (11) derart umfasst, dass wenigstens ein Befestigungsorgan (30) gleitend in jedem Führungsschlitz (11) montiert ist.

6. Schienenfahrzeug (V) gemäß Anspruch 3, bei dem der Basisteil (31) einen Gewindestift (33) umfasst, um sein Zusammenwirken mit dem Kopfteil (32) zu ermöglichen.

7. Schienenfahrzeug (V) gemäß einem der voranstehenden Ansprüche, bei dem die Befestigungsmittel ausgestaltet sind, um den genannten Trägerbalken (20) in das genannte Strukturfahrgestell (1) einzuspannen.

8. Schienenfahrzeug (V) gemäß einem der voranstehenden Ansprüche, bei dem das Strukturfahrgestell (1) Indexierungsmittel der Seitenposition des Trägerbalkens (20) umfasst.

9. Inneneinrichtungsverfahren eines Schienenfahrzeugs (V) zur Beförderung von Fahrgästen, wobei das Fahrzeug (V) ein Strukturfahrgestell (1) umfasst, das sich in Längsrichtung gemäß einer Längsachse (X) und seitlich gemäß einer Seitenachse (Y) erstreckt, wobei wenigstens ein Trägerbalken (20) von Sitzen (S) mit dem genannten Strukturbalken (1) durch Befestigungsmittel verbunden ist, wobei sich der genannte Trägerbalken (20) in Längsrichtung gemäß der Längsachse (X) des Strukturrahmens (1) erstreckt, wobei das Verfahren umfasst:
- einen Entriegelungsschritt der Befestigungsmittel derart, dass der Trägerbalken (20) vom Strukturfahrgestell (1) gelöst wird,
**wobei das Verfahren dadurch gekennzeichnet ist, dass es umfasst:**
- einen seitlichen Versetzungsschritt des Trägerbalkens in Bezug auf das Strukturfahrgestell (1) einer ersten Position bis zu einer zweiten Position und
- einen Verriegelungsschritt der Befestigungsmittel derart, dass der Trägerbalken (20) im Strukturfahrgestell in der zweiten Position fest befestigt ist.

10. Verfahren gemäß dem voranstehenden Anspruch, bei dem der Entriegelungsschritt das Aufrichten der Befestigungsmittel umfasst.

## Claims

1. A railway vehicle (V) for transporting passengers comprising:
- a structural chassis (1) extending longitudinally along a longitudinal axis (X) and laterally along a lateral axis (Y),
- at least one beam (20) for supporting seats (S) connected to said structural chassis (1), said supporting beam (20) extending longitudinally along the longitudinal axis (X) of said structural chassis (1),
which vehicle is **characterised in that**
- said supporting beam (20) is connected to the structural chassis (1) by fastening means configured to alter the lateral position of said supporting beam (20) relative to said structural chassis (1).

2. The railway vehicle (V) according to claim 1, wherein the fastening means comprise a plurality of fastening members (30) longitudinally distributed on said supporting beam (20).

3. The railway vehicle (V) according to the previous claim, wherein each fastening member (30) comprises a base part (31), movably mounted in the chassis (1), and a head part (32), integral with the supporting beam (20), the base part (31) and the head part (32) being adapted to be secured together, preferably, by clamping.

4. The railway vehicle (V) according to one of claims 2 to 3, wherein the structural chassis (1) comprises a plurality of cross members (10) extending laterally along the lateral axis (Y), and the supporting beam (20) is connected to each cross member (20) by a fastening member (30).

5. The railway vehicle (V) according to the previous claim, wherein each cross member (10) comprises a guide slot (11), so that at least one fastening member (30) is slidably mounted into each guide slot (11).

6. The railway vehicle (V) according to claim 3, wherein the base part (31) comprises a threaded rod (33) to allow its cooperation with the head part (32).

7. The railway vehicle (V) according to one of the previous claims, wherein the fastening means are configured to clamp said supporting beam (20) to said structural chassis (1).

8. The railway vehicle (V) according to one of the previous claims, wherein the structural chassis (1) comprises means for indexing lateral position of the supporting beam (20).

9. A method for the interior equipment of a railway vehicle (V) for transporting passengers, the vehicle (V) comprising a structural chassis (1) extending longitudinally along a longitudinal axis (X) and laterally along a lateral axis (Y), at least one beam (20) for supporting seats (S) connected to said structural chassis (1) by fastening means, said supporting beam (20) extending longitudinally along the longitudinal axis (X) of the structural chassis (1), the method comprising:
- a step of unlocking the fastening means so as to unsecure the supporting beam (20) from the structural chassis (1),
the method being **characterised in that** it comprises:
- a step of laterally moving the supporting beam relative to the structural chassis (1) from a first position toward a second position, and
- a step of locking the fastening means so as to secure the supporting beam (20) to the structural chassis in the second position.

10. The method according to the previous claim, wherein the unlocking step comprises unclamping the fastening means.
